# EUROPÄISCHE PATENTANMELDUNG

(11) **EP 0 811 762 A1**
(43) Veröffentlichungstag der Anmeldung: **10.12.1997**
(21) Anmeldenummer: 97109201.0
(22) Anmeldetag: 06.06.1997
(51) Int. Cl.: F02M 25/07, F02M 35/108

(54) **Abgasrückführungssystem**

(30) Priorität: 07.06.1996 DE 19622891
(71) Anmelder: Ranco Incorporated of Delaware, Wilmington, Delaware 19801-1612 (US)
(72) Erfinder: Klipfel, Bernhard, Dipl.-Ing., 76187 Karlsruhe (DE); Schlick, Karl-Heinz (verstorben), 68809 Neulussheim (DE); Krupp, Willi, 68775 Ketsch (DE)
(74) Vertreter: Görg, Klaus, Dipl.-Ing.

(57) **Zusammenfassung**

Ein Abgasrückführungssystem weist eine Abgasrückführungsleitung (24, 24a, 24b) zwischen der Abgasleitung (14) und der Ansaugleitung (12, 18, 20) eines Verbrennungsmotors (10), mindestens ein Abgasrückführungsventil (26, 32, 34) und einen Saugluftverteiler (16) auf, der in der Ansaugleitung (12) vorgesehen ist und die angesaugte Luft jedem Zylinder in zwei getrennten Saugleitungen (18, 20) zuführt. Die Abgasrückführungsleitung (24a) mündet zwischen dem Saugluftverteiler (16) und den Motorzylindern in die Ansaugleitung (20). Ferner ist eine elektronische Steuereinheit vorgesehen, die mit den Abgasrückführungsventilen (26, 32, 34) und einem Lasterfassungselement verbunden ist. Schließlich ist in jeder Saugleitung (20) an der Mündungsstelle der Abgasrückführungsleitung (24a) ein Abgasrückführungsventil (34) angeordnet.

## Beschreibung

Die vorliegende Erfindung betrifft ein Abgasrückführungssystem gemäß dem Oberbegriff des Anspruchs 1.

Eine derartige Vorrichtung ist aus der DE 42 32 456 C2 bekannt und weist eine Abgasrückführungsleitung zwischen der Abgasleitung und der Ansaugleitung eines Verbrennungsmotors und ein Abgasrückführungsventil in der Abgasrückführungsleitung auf. Ferner ist in der Ansaugleitung ein Saugluftverteiler vorgesehen, der die angesaugte Luft jedem Zylinder in zwei getrennten Saugleitungen zuführt, und die Abgasrückführungsleitung mündet zwischen dem Saugluftverteiler und den Motorzylindern in die einzelnen Ansaugleitungen.

Ein weiteres herkömmliches Abgasrückführungssystem ist aus der DE 42 22 797 A1 bekannt. Hierbei mündet die Abgasrückführungsleitung vor dem Saugluftverteiler in die Saugleitung.

Derartige Abgasrückführungssysteme dienen zur Erzielung der günstigen NOₓ-Emissionswerte (vgl. hierzu G. Eifler, Schadstoffminderung durch Abgasrückführung am kleinen, schnellaufenden Dieselmotor mit direkter

Kraftstoffeinspritzung, Dissertation RWTH Aachen, 1990, auf die hier ausdrücklich bezug genommen wird, wobei sich die Erfindung auch für langsamlaufende Dieselmotoren und Ottomotoren eignet). Die einfachste Form einer Abgasrückführungs(im folgenden AGR)-Steuerung ist die sogenannte "Schwarz-Weiß-Schaltung", bei der das AGR-Ventil in Abhängigkeit von der Regelstangenposition der Einspritzpumpe oder in Abhängigkeit von Last- und Drehzahl über eine in der Steuereinheit abgelegte Kennlinie auf- bzw. zugeschaltet wird. Als eine weitere Steuerungsvariante ist die Kennliniensteuerung bekannt, bei der das AGR-Ventil in Abhängigkeit von der Motordrehzahl oder dem Brenngasstrom in verschiedenen Positionen betätigt wird. Hierbei kann die kennlinien- oder kennfeldgeführte AGR-Mengenregelung z.B. über die angesaugte Luftmenge erfolgen.

Im Zusammenhang mit der Einführung der Vierventiltechnik, insbesondere beim Dieselmotor haben sich neue Möglichkeiten der Abstimmung von Drall und Zylinderfüllung ergeben. Hierbei ist es zwar grundsätzlich bekannt, jedem Zylinder die angesaugte Luft in zwei getrennten Saugleitungen zuzuführen, und die Abgasrückführungsleitung jeweils in eine der Saugleitungen münden zu lassen (vgl. DE 42 32 456 C2). Insbesondere bei hohen Abgasrückführraten ist jedoch keine exakte Steuerung der rückgeführten Abgasmenge möglich.

Es ist die der vorliegenden Erfindung zugrundeliegende Aufgabe, ein Abgasrückführungssystem zu schaffen, das einen besseren NOₓ-Emissionswert und/oder eine Verringerung des Kraftstoffverbrauchs gewährleistet.

Die Lösung dieser Aufgabe erfolgt bei einem Abgasrückführungssystem der eingangs genannten Art dadurch, daß eine elektronische Steuereinheit vorgesehen ist, die mit den Abgasrückführungsventilen und einem Lasterfassungselement, z.B. einem Luftmassensensor verbunden ist, und daß in jeder Saugleitung an der Mündungsstelle der Abgasrückführungsleitung ein Abgasrückführungsventil angeordnet ist. Vorzugsweise bildet die Steuereinheit mit den Abgasrückführventilen und dem Lasterfassungselement einen offenen oder geschlossenen Regelkreis.

Somit ist in jeder Saugleitung an der Mündungsstelle der Abgasrückführungsleitung ein Ventil, vorzugsweise ein Magnetventil, vorgesehen. Hierdurch wird das üblicherweise eingesetzte Abgasrückführ(AGR)-Ventil für die Rückführung in die einzelnen Leitungen durch vier einzelne Ventile, vorzugsweise Magnetventile, unmittelbar vor der Zumischstelle ersetzt, was hohe AGR-Raten und eine gute Anpassung an verschiedene Betriebszustände ermöglicht. Durch eine Anordnung der Magnetventile unmittelbar vor der Zumischstelle können die Totvolumina in den Rückführleitungen reduziert werden, woraus sich eine sehr gute Dynamik des Regelsystems ergibt. Hierzu trägt weiter bei, daß bei derartigen Magnetventilen eine Zweipunktschaltung anwendbar ist, die sehr schnell anspricht, was sich auf die Dynamik der Steuerung positiv auswirkt.

Die erfindungsgemäße Anordnung ermöglicht die Verwendung von äußerst einfach aufgebauten AGR-Steuerventilen in den einzelnen Abgasrückführungsleitungen. Ferner ist das erfindungsgemäße Abgasrückführungssystem für sämtliche Motortypen geeignet. Besondere Vorteile ergeben sich für die derzeit in der Entwicklung befindlichen Ottomotoren mit Direkteinspritzung, die hohe Abgasrückführströme, nahezu in der Größenordnung von Dieselmotoren, erfordern und somit eine exakte Steuerung der einzelnen, in die jeweiligen Saugleitungen zugeführten Abgasmenge benötigen. Bei den erforderlichen großen Leitungsquerschnitten bietet das erfindungsgemäße System erhebliche Vorteile gegenüber Anordnungen, die keine verbesserte Steuerung der jeweils rückgeführten Abgasmenge erlauben, und bei denen diese aufgrund der vergleichsweise geringen Leitungsquerschnitte verzichtbar war.

Vorteilhafte Ausführungsformen der Erfindung sind durch die Unteransprüche gekennzeichnet.

In vorteilhafter Weise können die einzelnen Abgasrückführventile als Auf-Zu-Ventile ausgebildet sein. Hierdurch ergibt sich ein äußerst einfacher Aufbau der jeweiligen Steuerventile, die durch ein einfaches Ansteuersignal betätigbar sind. Die Ansteuerung kann insbesondere anhand der Position der Drossel erfolgen. Hierdurch werden die Druckverhältnisse in der Saugleitung derart beeinflußt, daß eine Steuerung des rückgeführten Abgases erfolgt.

In bestimmten Anwendungsfällen kann für die jeweiligen Abgasrückführventile auch eine getaktete Ansteuerung mit einer Pulsweitenmodulation verwendet werden. Hierbei wird mit einer bestimmten Frequenz die Öffnung und Schließung des jeweiligen Ventils bewirkt, wobei die Öffnungs- und Schließdauer innerhalb der jeweiligen Periode modulierbar ist.

Ferner kann es in besonderen Anwendungsfällen Vorteile bieten, wenn die einzelnen Abgasrückführventile stufenlos oder mit Stufen modulierend angesteuert werden.

Bevorzugt ist in einer Saugleitung jedes Zylinders eine Saugleitungsdrossel vorgesehen, wobei zwischen Abgasleitung und Ansaugleitung eine AGR-Leitung vorgesehen ist. Hierdurch ist ein einfaches, jedoch zuverlässiges AGR-System geschaffen, das als einziges Stellglied des Regelkreises das AGR-Ventil aufweist und mit dem im Bereich der unteren Teillast die Verwirklichung von relativ hohen AGR-Raten in der Größenordnung von ca. 60 % und mehr möglich ist, da die in diesen Betriebspunkten geringe treibende Druckdifferenz zwischen Abgasgegendruck und Ladedruck durch eine Drosselung der Ansaugluft erhöht werden kann. Das durch die Saugleitungsdrosseln erzeugte Druckgefälle wird gewissermaßen zur Steuerung und insbesondere Erhöhung des Abgas-Volumenstroms verwendet.

Um die Volumina zwischen dem AGR-Ventil und einem Einlaßventil des Zylinders zu minimieren, kann nach einer weiteren Ausführungsform die Abgasrückführungsleitung in Strömungsrichtung hinter den Saugleitungsdrosseln und nahe bei dem jeweiligen Zylinder münden. Hierdurch erfolgt eine Rückführung in die Ansaugleitungen der einzelnen Zylinder, wobei in einer Ansaugleitung jedes Zylinders eine Saugleitungsdrossel zur Kanaldeaktivierung vorgesehen ist. Die Rückführung des Abgases hinter die Saugleitungsdrosseln der einzelnen Saugleitungen ermöglicht durch eine Drosselung der Ansaugluft sehr hohe AGR-Raten. Darüber hinaus ist bei einem vollständigen Schließen der Drosselklappen eine Gemischschichtung möglich, d. h. eine Rückführung des Abgases durch die abgeschaltete Saugleitung und eine Frischluftzufuhr durch die jeweils andere Saugleitung. Ein solches System weist ein sehr gutes dynamisches Verhalten der Regelstrecke auf. Die Mündung kurz vor den Zylindern erlaubt eine optimale Dynamik des Systems, d. h. eine schnelle Reaktion bei Laständerungen z. B. von hohen AGR-Raten zu geringen AGR-Raten oder umgekehrt. Dies liegt im wesentlichen am geringen Totvolumen zwischen der Mündung der Abgasrückführungsleitung und den Zylindern.

Bevorzugt ist neben den einzelnen, in die einzelnen Saugleitungen mündenden Abgasrückführungsleitungen eine weitere Abgasrückführungsleitung vorgesehen, in der ein Abgasrückführungsventil angeordnet ist, und die vor dem Saugluftverteiler in die Ansaugleitung mündet. Hiermit kann eine Basis-AGR-Menge zurückgeführt werden, die dann durch die zusätzliche AGR-Menge der einzelnen AGR-Ventile verändert werden kann.

Nach einer weiteren Ausführungsform der Erfindung kann in der Ansaugleitung in Strömungsrichtung vor der Abgasrückführungsleitung eine Drossel angeordnet sein. Da aufgrund des geringen treibenden Druckgefälles im Bereich der unteren Teillast und aufgrund eines schlechten dynamischen Verhaltens lediglich begrenzte AGR-Raten zur Verfügung stehen, die ihre Ursache in dem Totvolumen haben, das zwischen AGR-Ventil und Einlaßventil vorhanden ist, wird durch eine Drosselklappe im Ansaugtrakt vor der Zumischstelle für die Abgasrückführung eine Erhöhung des treibenden Druckgefälles durch die Drosselung der Ansaugluft erzielt. Hierbei kann vorteilhafterweise die Drosselklappe im Bereich höherer Lasten bzw. Drehzahlen vollständig geöffnet werden, so daß Wirkungsgradeinbußen verhindert sind.

Nach einer weiteren vorteilhaften Ausführungsform sind die jeweilige Drossel in der Ansaugleitung und das Abgasrückführungsventil als ein gemeinsames Bauteil ausgebildet. Durch diese Ausführungsform entsteht kein erhöhter Bauaufwand, was die Kosten eines derartigen AGR-Systems deutlich verringert.

Nach einer weiteren vorteilhaften Ausführungsform der Erfindung kann eine Kühleinrichtung vorgesehen sein, die das rückzuführende Abgas kühlt. Gegenüber der bislang im Stand der Technik verwirklichten heißen Abgasrückführung, welche die Zylinderfüllung verringert, lassen sich nunmehr die Abgase auch gekühlt zurückführen, wodurch neben einer verbesserten Zylinderfüllung auch deutlich verminderte NOₓ-Emissionen aufgrund niedrigerer Brennraumtemperaturen erreicht werden können.

Nach einer weiteren Ausbildung der Erfindung kann die Kühleinrichtung ein Leitungsteilstück aufweisen, das durch den Zylinderkopf geführt ist. Hierdurch läßt sich eine Kühlung des AGR-Stromes auf konstruktiv einfache Weise erzielen, wobei lediglich der Zylinderkopf entsprechend konstruiert sein muß.

Bevorzugt ist das mit der Regeleinrichtung in Verbindung stehende Lasterfassungselement in der Ansaugleitung angeordnet und z.B. als Luftmassensensor, insbesondere als Heißfilmluftmassensensor ausgebildet.

Sofern nach einer weiteren Ausbildung der Erfindung als Abgasrückführungsventil ein elektrisch betätigtes Ventil mit einer Ansprechzeit von wenigen Millisekunden eingesetzt wird, lassen sich die Anforderungen an niedrige Emissionen auch im dynamischen Fahrbetrieb erfüllen. Um eine entsprechend dynamische Regelung zu gewährleisten, kann ferner an dem Abgasrückführungsventil ein Positionssensor angeordnet sein, der die jeweilige Stellung des Ventils an die Steuerung zurückmeldet.

Für die Steuerung der Abgasrückführungsventile bietet es bei proportionalem Betrieb Vorteile, wenn an diesen ein Positionssensor angeordnet ist.

Die oben beschriebenen Abgasrückführungssysteme eignen sich insbesondere für einen Dieselmotor mit zwei Einlaßventilen pro Zylinder sowie für einen Ottomotor mit Direkteinspritzung.

Nach einer weiteren Ausbildung der Erfindung ist sowohl in der vor dem Saugluftverteiler mündenden AGR-Leitung wie auch in der zu den Saugleitungen führenden AGR-Leitung ein AGR-Ventil vorgesehen. Durch diese Anordnung von zwei AGR-Ventilen in der AGR-Leitung kann in vorteilhafter Weise eine Basis-AGR-Menge zurückgeführt werden, die dann durch die zusätzlichen AGR-Mengen der einzelnen AGR-Ventile in den einzelnen AGR-Leitungen schnell verändert werden kann. Ein AGR-Regelkreis umfaßt dann als Stellglieder die Saugleitungsdrossel, das AGR-Ventil für die Rückführung in den Saugluftverteiler und das AGR-Ventil für die Rückführung unmittelbar vor die Saugleitungsdrosseln. Hierbei ist es vorteilhaft, wenn diese drei Stellglieder durch Steuerfunktionen aneinandergekoppelt werden. Durch eine Gleichverteilung des rückgeführten Abgases durch eine genaue Justierung der Saugleitungsdrosseln kann die Schadstoffemission beachtlich verringert werden.

Nach einer weiteren vorteilhaften Ausführungsform der Erfindung ist in der vor dem Saugluftverteiler mündenden Abgasrückführungsleitung ein AGR-Ventil angeordnet und in jeder Saugleitung ist an der Mündungsstelle der Abgasrückführungsleitung ein Magnetventil vorgesehen.

Nachfolgend wird die vorliegende Erfindung rein beispielhaft anhand vorteilhafter Ausführungsformen beschrieben. Es zeigen:
- Fig. 1: eine schematische Ansicht einer Vorstufe des Abgasrückführungssystems gemäß der vorliegenden Erfindung;
- Fig.: 2 eine schematische Darstellung einer weiteren Vorstufe eines Abgasrückführungssystems gemäß der vorliegenden Erfindung;
- Fig. 3: eine schematische Darstellung eines Abgasrückführungssystemes, bei dem das Abgas hinter einer Saugleitungsdrossel in einer Saugleitung jedes Zylinders zurückgeführt wird;
- Fig. 4: ein Abgasrückführungssystem gemäß der vorliegenden Erfindung; und
- Fig. 5: eine teilgeschnittene Ansicht der Abgasrückführungsleitung und der Saugleitung des in Fig. 4 dargestellten Systems, die mit einem Magnetventil versehen sind.

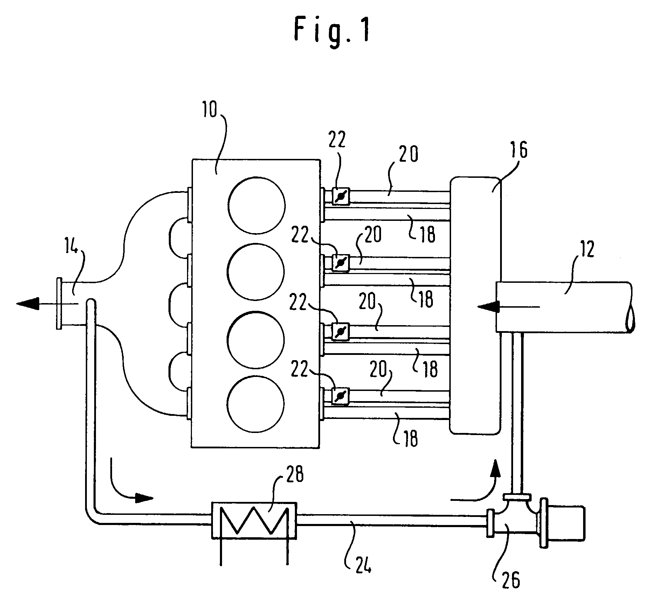

Das in Fig. 1 dargestellte Abgasrückführungssystem befindet sich an einem Vierventil-Dieselmotor 10, der mit einer Ansaugleitung 12 und einer Abgasleitung 14 versehen ist. Hierbei werden die Abgasströme der einzelnen Zylinder zunächst gesammelt und dann in einer gemeinsamen Abgasleitung abgeführt. Die Ansaugleitung 12 mündet in einen Saugluftverteiler 16, der wiederum über jeweils zwei Saugleitungen 18 und 20 mit jedem einzelnen Zylinder des Motors 10 verbunden ist.

In jeder Saugleitung 20, die von dem Saugluftverteiler 16 zu einem Zylinder des Motors 10 führt, ist eine Saugleitungsdrossel 22 angeordnet, die sich relativ nahe bei dem jeweiligen Zylinder befindet.

Zwischen der Abgasleitung 14 und der Ansaugleitung 12 ist ferner eine Abgasrückführungsleitung 24 geführt, wobei zur Steuerung des rückgeführten Abgasstromes ein Abgasrückführungsventil 26 in der Abgasrückführungsleitung 24 vorgesehen ist.

Eine nicht dargestellte elektronische Steuereinheit ist mit dem Abgasrückführungsventil 26 und bei dieser Ausführungsform mit einem ebenfalls nicht dargestellten Luftmassensensor verbunden, der in der Ansaugleitung 12 angeordnet ist. Hierbei wird als Luftmassensensor vorzugsweise ein Heißfilmluftmassensensor verwendet.

Wie aus Fig. 1 gut zu erkennen ist, mündet die Abgasrückführungsleitung 24 in Strömungsrichtung gesehen unmittelbar vor dem Saugluftverteiler 16 in die Ansaugleitung 12. Ebenfalls in Strömungsrichtung gesehen vor dem AGR-Ventil 26 ist eine nicht näher dargestellte Kühleinrichtung 28 vorgesehen, die den rückzuführenden Abgasstrom kühlt.

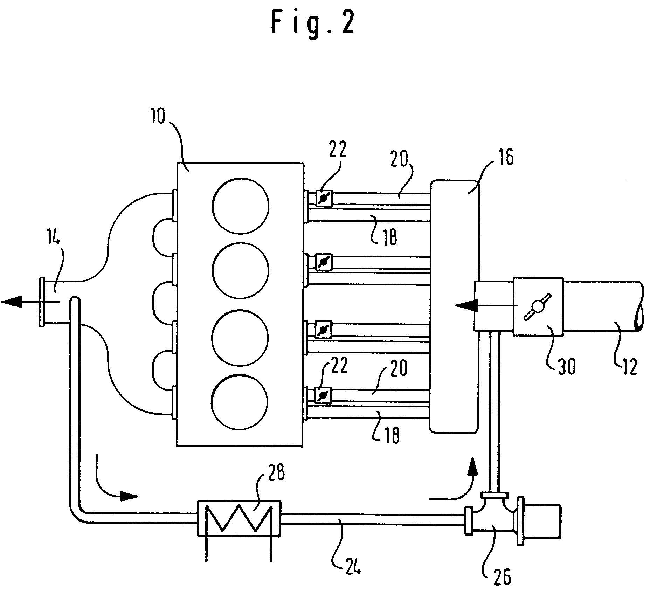

Fig. 2 zeigt eine weitere Variante des in Fig. 1 dargestellten AGR-Systems, wobei für gleiche Teile gleiche Bezugszeichen verwendet werden.

Bei dem in Fig. 2 dargestellten AGR-System ist in der Ansaugleitung 12 eine Drossel 30 vorgesehen, die in Strömungsrichtung unmittelbar vor der Abgasrückführungsleitung 24 angeordnet ist. Im übrigen entspricht der Aufbau dieses Systems dem in Fig. 1 dargestellten System.

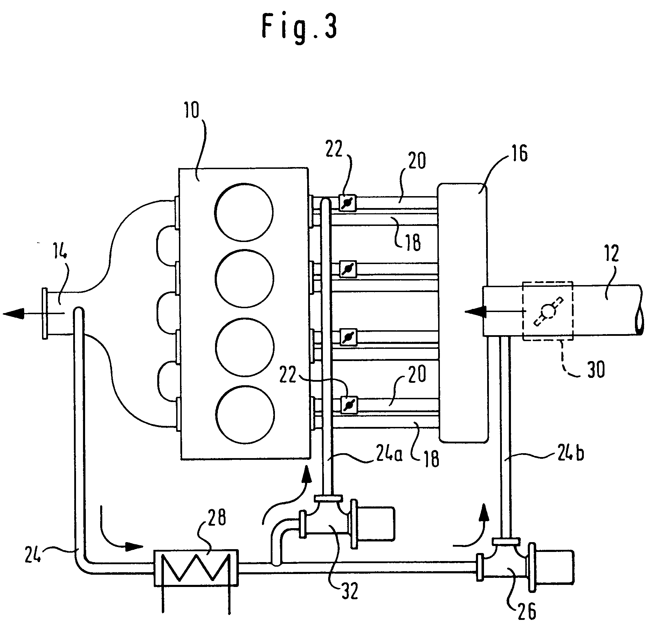

Fig. 3 zeigt eine weitere Variante eines Abgasrückführungssystems. Bei dem in Fig. 3 dargestellten System ist die Abgasrückführungsleitung 24 über eine Zweigleitung 24a zu den Saugleitungen 20 jedes einzelnen Zylinders geführt. Hierbei mündet die Abgasrückführungsleitung 24a in Strömungsrichtung hinter den Saugleitungsdrosseln 22 und unmittelbar vor dem jeweiligen Zylinder des Motors 10. Ein zweiter Zweig 24b der Abgasrückführungsleitung 24 ist - wie auch bereits bei dem in den Fig. 1 und 2 dargestellten System - zu der Ansaugleitung 12 geführt und mündet in diese unmittelbar vor dem Saugluftverteiler 16. (Dieser Zweig kann aber auch weggelassen werden.) Hierbei ist der AGR-Zweig 24b über das AGR-Ventil 26 zu der Saugleitung 12 geführt. Die im Zusammenhang mit Fig. 2 in der Saugleitung 12 vorhandene Drossel 30 kann bei dem in Fig. 3 dargestellten System ebenfalls wahlweise vorgesehen sein.

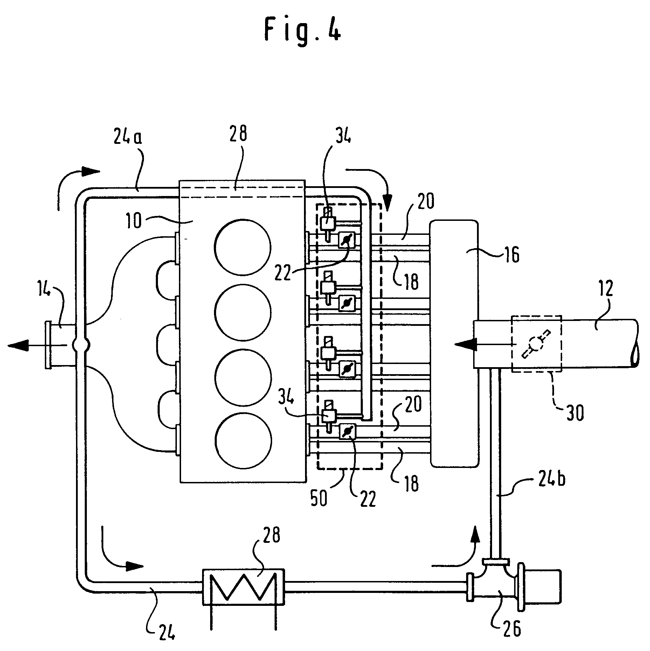

Fig. 4 zeigt eine Ausführungsform der vorliegenden Erfindung. Bei dem in Fig. 4 dargestellten AGR-System ist wie auch in Fig. 3 die AGR-Leitung 24 über einen in diesem Fall vorgesehenen Zweig 24b zu der Ansaugleitung 12 geführt. Auch ist ein weiterer Zweig 24a zu jeder Saugleitung 20 geführt. Anstelle des AGR-Ventils 32 von Fig. 3 ist jedoch in jeder Saugleitung 20 an der Mündungsstelle der Abgasrückführungsleitung 24a ein Magnetventil 34 angeordnet. Hierbei ist die Anordnung so gewählt, daß sich das Magnetventil zwischen dem jeweiligen Zylinder und der Saugleitungsdrossel 22 befindet. Die von der Abgasleitung 14 zu den Saugleitungen 20 führende AGR-Leitung 24a ist bei dem in Fig. 4 dargestellten System durch den Zylinderkopf des Motors 10 geführt, wodurch das rückzuführende Abgas gekühlt wird. Daneben ist in dem AGR-Leitungszweig, der zur Ansaugleitung 12 führt, eine weitere Kühleinrichtung 28 vorgesehen.

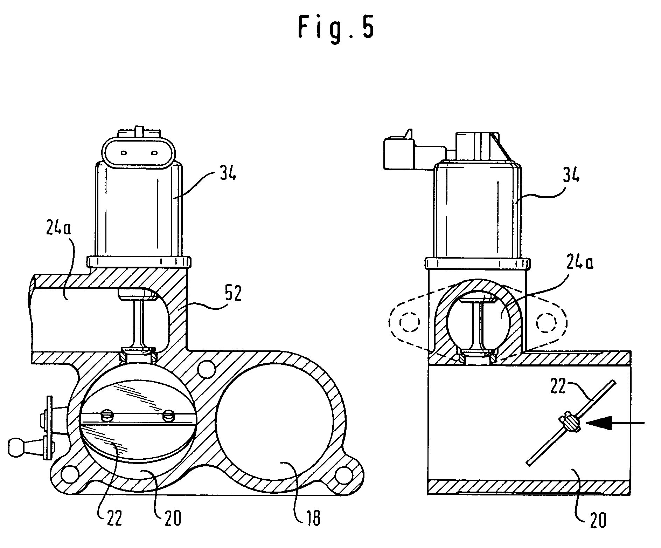

In Fig. 5 ist ein Querschnitt durch einen Teil des Systems von Fig. 4 dargestellt, der dort gestrichelt angedeutet und mit dem Bezugszeichen 50 versehen ist. Wie Fig. 5 zeigt, ist ein einstückiges Gehäuse 52 vorgesehen, das die AGR-Leitung 24a, die Saugleitung 20 sowie die weitere Saugleitung 18 bildet. Hierbei ist in der Saugleitung 20 die Saugleitungsdrossel 22 in Form einer Drosselklappe vorgesehen. Die AGR-Leitung 24a ist über einen Durchlaß mit der Saugleitung 20 verbunden, der von einem elektromagnetisch betätigbaren Ventil 34 verschlossen werden kann, das eine Ansprechzeit von wenigen Millisekunden aufweist.

## Patentansprüche

1. Abgasrückführungssystem, mit
- einer Abgasrückführungsleitung (24, 24a, 24b) zwischen der Abgasleitung (14) und der Ansaugleitung (12, 18, 20) eines Verbrennungsmotors (10);
- mindestens einem Abgasrückführungsventil (26, 32, 34) in der Abgasrückführungsleitung (24, 24a, 24b); und
- einem Saugluftverteiler (16), der in der Absaugleitung (12) vorgesehen ist und die angesaugte Luft jedem Zylinder in zwei getrennten Saugleitungen (18, 20) zuführt, wobei
- die Abgasrückführungsleitung (24) zwischen dem Saugluftverteiler (16) und den Motorzylindern in die Ansaugleitung mündet,
dadurch **gekennzeichnet,** daß
- eine elektronische Steuereinheit vorgesehen ist, die mit den Abgasrückführungsventilen (26, 32, 34) und einem Lasterfassungselement verbunden ist, und
- in jeder Saugleitung (20) an der Mündungsstelle der Abgasrückführungsleitung (24a) ein Abgasrückführungsventil (34) angeordnet ist.

2. Vorrichtung nach Anspruch 1,
dadurch **gekennzeichnet,** daß
das Abgasrückführungsventil (34) ein Auf-Zu-Ventil ist.

3. Vorrichtung nach Anspruch 1 oder 2,
dadurch **gekennzeichnet,** daß
das Abgasrückführungsventil (34) eine getaktete Ansteuerung mit Pulsweitenmodulation aufweist.

4. Vorrichtung nach zumindest einem der vorangehenden Ansprüche,
dadurch **gekennzeichnet,** daß
das Abgasrückführungsventil (34) stufenlos oder in Stufen modulierend angesteuert wird.

5. Vorrichtung nach zumindest einem der vorangehenden Ansprüche,
dadurch **gekennzeichnet,** daß
in der Saugleitung (20) jedes Zylinders eine Saugleitungsdrossel (22) vorgesehen ist.

6. Vorrichtung nach Anspruch 5,
dadurch **gekennzeichnet,** daß
die Abgasrückführungsleitung (24a) in Strömungsrichtung hinter den Saugleitungsdrosseln (22) und nahe bei dem jeweiligen Zylinder mündet.

7. Vorrichtung nach zumindest einem der vorangehenden Ansprüche,
dadurch **gekennzeichnet,** daß
eine weitere Abgasrückführungsleitung (24b), in der ein Abgasrückführungsventil (26) angeordnet ist, vor dem Saugluftverteiler (16) in die Ansaugleitung (12) mündet.

8. Vorrichtung nach zumindest einem der vorangehenden Ansprüche,
dadurch **gekennzeichnet,** daß
in der Ansaugleitung (12) eine Drossel (30) angeordnet ist.

9. Vorrichtung nach zumindest einem der vorangehenden Ansprüche,
dadurch **gekennzeichnet,** daß
die Drossel (22, 30) und das Abgasrückführungsventil (34, 26) als ein gemeinsames Bauteil ausgebildet sind.

10. Vorrichtung nach zumindest einem der vorangehenden Ansprüche,
dadurch **gekennzeichnet,** daß
eine Kühleinrichtung (28) vorgesehen ist, die das rückzuführende Abgas kühlt.

11. Vorrichtung nach Anspruch 10,
dadurch **gekennzeichnet,** daß
die Kühleinrichtung ein Leitungsteilstück aufweist, das durch den Zylinderkopf des Motors (10) geführt ist.

12. Vorrichtung nach zumindest einem der vorangehenden Ansprüche,
dadurch **gekennzeichnet,** daß
das Lasterfassungselement in der Ansaugleitung angeordnet und ein Luftmassensensor, vorzugsweise ein Heißfilmluftmassensensor ist.

13. Vorrichtung nach zumindest einem der vorangehenden Ansprüche,
dadurch **gekennzeichnet,** daß
das Abgasrückführungsventil ein elektrisch betätigtes Ventil mit einer Ansprechzeit von wenigen Millisekunden ist.

14. Vorrichtung nach zumindest einem der vorangehenden Ansprüche,
dadurch **gekennzeichnet,** daß
an dem Abgasrückführungsventil ein Positionssensor angeordnet ist.

15. Vorrichtung nach zumindest einem der vorangehenden Ansprüche,
dadurch **gekennzeichnet,** daß
der Motor ein Dieselmotor, insbesondere mit zwei Einlaßventilen pro Zylinder, oder ein Ottomotor mit Direkteinspritzung ist.
